(19) Europäisches Patentamt
European Patent Office
Office européen des brevets

(11) Veröffentlichungsnummer: **0 231 462 B1**

# (12) EUROPÄISCHE PATENTSCHRIFT

(45) Veröffentlichungstag der Patentschrift: 27.09.89

(51) Int. Cl.⁴: C08G 73/16, C09K 19/38

(21) Anmeldenummer: 86116324.4

(22) Anmeldetag: 25.11.86

ERRATUM

| DIE TEXTSTELLE : TEXT PUBLISHED : LE PASSAGE SUIVANT : | (SEITE, SPALTE, ZEILE) (PAGE, COLUMN, LINE) (PAGE, COLONNE, LIGNE) | | | LAUTET BERICHTIGT: SHOULD READ : DEVRAIT ETRE LU : |
|---|---|---|---|---|
| Formel VI mindestens zu 100 Mol.% enthalten. | 4 | | 17/18 | Formel VI mindestens zu 10 Mol.% enthalten. |
| Polyetheresterimide sind erhältlich durch eine Reihe von analogen Techniken, | 4 | | 25/26 | Polyetheresterimide sind erhältlich durch Umsetzen der den Einheiten I bis IV entsprechenden Hydroxy- und Carboxyverbindungen und deren Erster bildenden Derivate nach einer Reihe von analogen Techniken, |
| c) 15 bis 30 Mol.% wiederkehrenden Einheiten der Formel III, einer Summe aus b)plus c) minus a) | 6 | | 63 | c. 15 bis 30 Mol.% wiederkehrenden Einheiten der Formel III,<br>d. einer Summe aus b)plus c) minus a) |

Tag der Entscheidung über die Berichtigung / Date of decision on rectification: / Date de décision portant sur modification: 20.12.89

Ausgabe- und Veröffentlichungstag: / Issue and publication date: / Date d'edition et de publication: 21.3.90

Patbl.Nr) / EPB no:) / Bull. no:) 90/12

(19) Europäisches Patentamt
European Patent Office
Office européen des brevets

(11) Veröffentlichungsnummer: **0 231 462**
**B1**

# (12) EUROPÄISCHE PATENTSCHRIFT

(45) Veröffentlichungstag der Patentschrift: **27.09.89**

(51) Int. Cl.⁴: **C08G 73/16**, C09K 19/38

(21) Anmeldenummer: **86116324.4**

(22) Anmeldetag: **25.11.86**

## (54) Vollaromatische mesomorphe Polyetheresterimide, deren Herstellung und Verwendung.

(30) Priorität: **04.12.85 DE 3542833**

(43) Veröffentlichungstag der Anmeldung: **12.08.87 Patentblatt 87/33**

(45) Bekanntmachung des Hinweises auf die Patenterteilung: **27.09.89 Patentblatt 89/39**

(84) Benannte Vertragsstaaten: **AT BE CH DE FR GB IT LI LU NL SE**

(56) Entgegenhaltungen:
**EP-A- 0 163 518**

**JOURNAL OF POLYMER SCIENCE, Band 42, 1973, Seiten 867-877, John Wiley & Sons, Inc.; A.I.KOLTSOV et al.: "Investigation of conformations of macromolecules and crystalline structure of aromatic polyimides"**

(73) Patentinhaber: **BASF Aktiengesellschaft, Carl-Bosch-Strasse 38, D-6700 Ludwigshafen(DE)**

(72) Erfinder: **Hisgen, Bernd, Dr., Goethestrasse 6, D-6703 Limburgerhof(DE)**
Erfinder: **Portugall, Michael, Dr., Raiffeisenstrasse 7, D-6706 Wachenheim(DE)**
Erfinder: **Blinne, Gerd, Dr., Im Woogtal 7, D-6719 Bobenheim(DE)**

EP 0 231 462 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Gegenstand der Erfindung sind vollaromatische Polyetheresterimide, die unterhalb 320°C eine flüssigkristalline fadenbildende Schmelze bilden.

Aus der US-PS 4 383 105 sind Polyesterimide bekannt die aus Hydroxynaphthalincarbonsäure, 4-Hydroxybenzoesäure sowie 4-Carboxy-N-(p-hydroxyphenyl)-phthalimid aufgebaut sind. Solche Polyesterimide bedürfen jedoch Verarbeitungstemperaturen von über 320°C. Auch die aus der US-PS 4 176 223 bekannten Polyesterimide die sich von 4-(4-Hydroxyphthalimido)-phenol, Terephthalsäure und Naphthalindicarbonsäure sowie gegebenenfalls substituierten Hydrochinonen ableiten, bedürfen bei der Verarbeitung Temperaturen über 320°C. Zudem sind disubstituierte Naphthalinkomponenten wenig wohlfeile Ausgangsstoffe.

Es war deshalb die technische Aufgabe gestellt, vollaromatische mesomorphe Polyetheresterimide zur Verfügung zu stellen, die unterhalb von 320°C aus der Schmelze verarbeitbar sind, eine hohe Wärmeformbeständigkeit aufweisen und sich durch eine glatte abriebfeste Oberfläche auszeichnen.

Diese Aufgabe wird gelöst durch vollaromatische mesomorphe Polyetheresterimide die bei einer Temperatur unterhalb 320°C eine flüssigkristalline fadenbildende Schmelze bilden, aufgebaut aus

a) 5 bis 35 Mol.% wiederkehrende Einheiten der Formel I

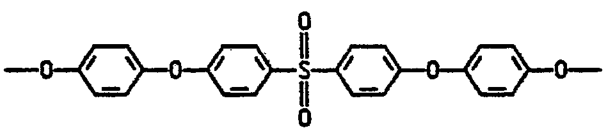

(I)

b) 5 bis 35 Mol.% wiederkehrende Einheiten der Formel II

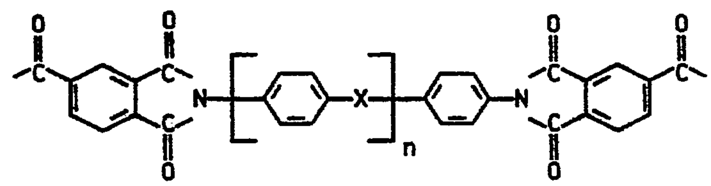

(II)

in der X für eine chemische Bindung -O-, -S-, $-SO_2-$, -CO-, $-CH_2-$, $=C(CH_3)_2$ steht und n 0 oder 1 bezeichnet.

c) 15 bis 30 Mol.% wiederkehrende Einheiten der Formel III

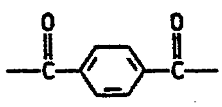

(III)

d) einer Summe aus b) plus c) minus a) entsprechenden molaren Menge an wiederkehrenden Einheiten der Formeln IV und/oder V

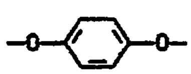

(IV)

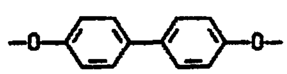

(V)

e) 0 bis 50 Mol.% wiederkehrenden Einheiten der Formel VI

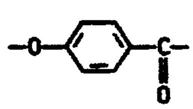

(VI)

wobei sich die Summe der Molprozente a) bis e) jeweils auf 100 Mol.% ergänzt.

Die neuen vollaromatischen flüssigkristallinen Polyetheresterimide lassen sich unterhalb 320°C aus der Schmelze verformen und haben eine hohe Wärmeformbeständigkeit. Weiter haben die neuen Polyetheresterimide eine glatte abriebfeste Oberfläche. Ferner zeichnen sich die neuen Polyetheresterimide durch hohe Steifigkeit, Festigkeit und Zähigkeit aus. Schließlich haben die neuen Polyetheresterimide den Vorteil, daß sie weitgehend chemikalienbeständig und schwerentflammbar sind.

Der flüssigkristalline Zustand der Polyetheresterimide kann mit dem Polarisationsmikroskop nach einer in der DE-AS 25 20 819 beschriebenen Methode nachgewiesen werden. Zwischen gekreuzten

Polarisatoren weisen die Polymerschmelzen, die in einer Schichtdicke von 10 µm zwischen Glasplatten aufgetragen sind, Texturen auf, die einer mesomorphen (nematischen) Phase zugeordnet werden können.

Die erfindungsgemäßen Polyetheresterimide sind aufgebaut aus

a) 5 bis 35 Mol.% wiederkehrenden Einheiten der Formel I

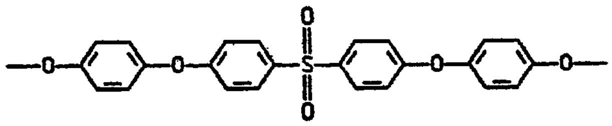

(I)

Eine geeignete Ausgangsverbindung ist beispielsweise 4,4'-Di-(p-hydroxyphenoxy)-diphenylsulfon.

b) 5 bis 35 Mol.% wiederkehrenden Einheiten der Formel II

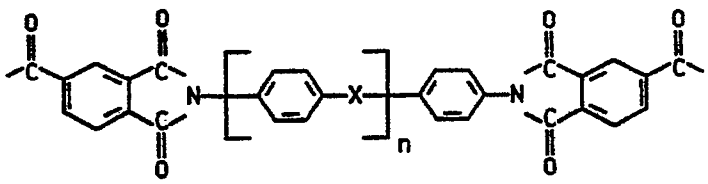

(II)

in der X eine chemische Bindung -O-, -S-, $-SO_2-$, -CO-, $-CH_2-$ oder $=C(CH_3)_2$ bezeichnet und n für 0 oder 1 steht. Geeignete Ausgangsverbindungen sind beispielsweise
4,4'-Bis-[(4-carboxy)-N-phthalimido]diphenylether,
4,4'-Bis-[(4-carboxy)-N-phthalimido]diphenylmethan,
4,4'-Bis-[(4-carboxy)-N-phthalimido]diphenylsulfon,
4,4'-Bis-[(4-carboxy)-N-phthalimido]diphenylsulfid,
4,4'-Bis-[(4-carboxy)-N-phthalimido]diphenylketon,
3,4'-Bis-[(4-carboxy)-N-phthalimido]diphenylether,
3,4'-Bis-[(4-carboxy)-N-phthalimido]diphenylsulfid,
3,4'-Bis-[(4-carboxy)-N-phthalimido]diphenylsulfon,
3,4'-Bis-[(4-carboxy)-N-phthalimido]diphenylketon,
3,4'-Bis-[(4-carboxy)-N-phthalimido]diphenylmethan.
Die Herstellung dieser Ausgangsverbindung wird z.B. beschrieben in J. Polym. Sci. (A-I), 7, 321-332 (1969).

c) 15 bis 30 Mol.% wiederkehrenden Einheiten der Formel III

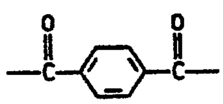

(III)

Eine geeignete Ausgangsverbindung ist z.B. Terephthalsäure.

d) Einer Summe aus den Komponenten a) und b) minus c) entsprechenden molaren Menge an wiederkehrenden Einheiten der Formeln IV und/oder V

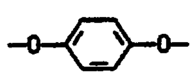

(IV)

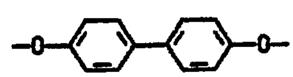

(V)

Ausgangsverbindungen sind z.B. Hydrochinon und 4,4'-Dihydroxibiphenyl

e) wiederkenhrenden Einheiten der Formel VI

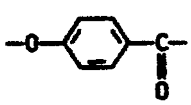

(VI)

Ausgangsverbindung ist z.B. 4-Hydroxybenzoesäure.

Es versteht sich, daß sich die Molprozente der Komponenten a) bis e) jeweils auf 100 Mol.% ergänzen.
Bevorzugte Polyetheresterimide sind aufgebaut aus

a) 10 bis 30 Mol.% wiederkehrenden Einheiten der Formel I
b) 10 bis 30 Mol.% wiederkehrenden Einheiten der Formel II
c) 15 bis 30 Mol.% wiederkehrenden Einheiten der Formel III
d) einer Summe aus b) plus c) minus a) entsprechenden molaren Menge an wiederkehrenden Einheiten der Formeln IV und/oder V sowie
e) wiederkehrenden Einheiten der Formel VI.

Besonders bewährt haben sich Polyetheresterimide die aufgebaut sind aus

a) 15 bis 25 Mol.% wiederkehrenden Einheiten der Formel I,
b) 15 bis 25 Mol.% wiederkehrenden Einheiten der Formel II,
c) 20 bis 30 Mol.% wiederkehrenden Einheiten der Formel III,
d) einer Summe aus b) plus c) minus a) entsprechenden molaren Menge an wiederkehrenden Einheiten der Formeln IV und/oder V, insbesondere jedoch IV,
e) wiederkehrenden Einheiten der Formel VI.

In bevorzugten Polyesterimiden sind wiederkehrende Einheiten der Formel VI mindestens zu 100 Mol.% enthalten.

Bevorzugte vollaromatische Polyetheresterimide haben eine Glasübergangstemperatur von ≧ 150°C, insbesondere ≧ 170°C. Die Glastemperatur soll dabei gemessen werden mit der DSC-Methode, wie sie beschrieben ist von K.H. Illers u.a. in Makromolekulare Chemie, Band 127 (1969), S. 1ff. Die vollaromatisch flüssigkristallinen Polyetheresterimide bilden bei einer Temperatur < 320°C, eine flüssigkristalline fadenbildende Schmelze. Bevorzugt sind auch flüssigkristalline aromatische Polyetheresterimide, die bei einer Temperatur > 200°C und < 300°C Teilkristallinität aufweisen.

Die erfindungsgemäßen flüssigkristallinen Polyetheresterimide sind erhältlich durch eine Reihe von analogen Techniken, wie sie beispielsweise in der US-PS 4 375 530 und US-PS 4 118 372 beschrieben werden.

Nach einer vorteilhaften Arbeitsweise erhält man die erfindungsgemäßen Polyetheresterimide in einem Einstufenverfahren, bei dem man die nicht derivatisierten Ausgangsstoffe unter Verwendung von Anhydriden, niederen Fettsäuren z.B. Fettsäuren mit 2 bis 4 Kohlenstoffatomen, insbesondere Essigsäureanhydrid, gegebenenfalls unter Mitverwendung von Katalysatoren, umsetzt. Geeignete Katalysatoren sind beispielsweise in der EP-A 131 846, Seite 9 beschrieben. Diese werden vorteilhaft in einer Menge von 0.001 bis 1 Gew.%, bezogen auf die Ausgangsstoffe, eingesetzt. Bei der Umsetzung werden die Ausgangsstoffe zusammen mit Fettsäureanhydrid, vorteilhaft in einem mindestens 5 %igen molaren Überschuß, bezogen auf die vorhandenen Hydroxygruppen, unter Inertgasatmosphäre und Rühren auf eine Temperatur erhitzt, bei der Rückfluß zu beobachten ist. Vorteilhaft wird die Temperatur stufenweise gesteigert, z.B. höchstens 5 Stunden, vorzugsweise bis zu 2 Stunden auf 130 bis 200°C, anschließend wird die Temperatur z.B. innerhalb von 2 bis 2 1/2 Stunden auf 250 bis 350°C gesteigert. Hierbei werden überschüssige Fettsäureanhydride und Fettsäuren abdestilliert. Um die Reaktion zu vervollständigen hat es sich als vorteilhaft erwiesen, gegen Ende verminderten Druck, z.B. 200 bis 0,1 mbar, anzuwenden.

Bemerkenswert und nicht vorherzusehen bei der Anwendung dieses Einstufenverfahrens ist zunächst die problemlose und vollständige Reaktion ohne Katalysatorzusatz zu den gewünschten Polymeren in einer relativ kurzen Zeit. Dies ist umso bemerkenswerter als durch die Vielzahl chemisch unterschiedlicher Hydroxygruppen eine Abstufung der Reaktivitäten und damit ein mangelhafter Polymeraufbau zu erwarten wäre.

Die so erhaltenen vollaromatischen flüssigkristallinen Polyetheresterimide werden vorteilhaft in festem Zustand z.B. bei einer Temperatur von 150 bis 250°C bis zur gewünschten Viskosität weiterkondensiert. Diese Nachkondensation in fester Phase kann sowohl vor als auch nach einer thermoplastischen Verarbeitung erfolgen. Vorteilhaft führt man die Kondensation in fester Phase unter Mitverwendung von Inertgasen wie Stickstoff durch.

Die Polyetheresterimide gemäß der Erfindung können durch übliche Zusatzstoffe wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, faser- oder pulverförmige Füll- und Verstärkungsmittel, Keimbildungsmittel oder Weichmacher modifiziert werden. Solche Mittel werden in üblichen wirksamen Mengen angewandt.

Die Stabilisatoren können den Polyetheresterimiden in jedem Stadium der Herstellung oder den fertigen Polymeren zugesetzt werden. Vorzugsweise werden die Stabilisatoren zu einem frühen Zeitpunkt zugesetzt, um zu verhindern, daß die Zersetzung bereits beginnt, bevor die Polymeren geschützt werden können.

Zu den Oxidationsverzögerern und Wärmestabilisatoren die den Polyetheresterimiden gemäß der Erfindung zugesetzt werden können, gehören diejenigen die allgemein für Polymere angewandt werden, wie Halogenide von Metallen der Gruppe I des Periodischen Systems, z.B. Natrium, Kalium oder Lithium mit Kupfer-I-halogeniden, z.B. Chloriden, Bromiden oder Iodiden.

Weitere geeignete Stabilisatoren sind sterisch gehinderte Phenole, Hydrochinone sowie verschiedene substituierte Vertreter dieser Gruppen und Kombinationen derselben. Solche Stabilisatoren awerden im allgemeinen in Konzentrationen bis zu 1 Gew.%, bezogen auf das Gewicht der Mischung, angewandt.

Als UV-Stabilisatoren sind ebenfalls diejenigen geeignet, die man allgemein zu Polymeren zusetzt, z.B. in Mengen bis zu 2 Gew.%, bezogen auf die polymere Masse. Beispiele für UV-Stabilisatoren sind verschiedene substituierte Resorcine, Salicylate, Benztriazole, Benzophenone und dergleichen.

Weitere Hilfsstoffe sind organische Farbstoffe wie Nigrosin, ferner Pigmente wie Titandioxid, Cadmiumsulfid, Cadmiumsulfid-Selenit, Phthalocyanine, Ultramarinblau oder Ruß. Als geeignete faser- und pulverförmige Füllstoffe und Verstärkungsmittel seien genannt Kohlenstofffasern, Glasfasern, amorphe Kieselsäure, Asbest, Calciumsilikat, Aluminiumsilikat, Magnesiumcarbonat, Kaolin, Kreide, gepulverter Quarz, Glimmer oder Feldspat. Solche Verstärkungsmittel werden in Mengen bis zu 70 Gew.% des Polymeren angewandt.

Ferner sind geeignete Hilfsmittel Keimbildungsmittel, wie Talkum, Calciumfluorid, Natriumphenylphosphinat, Aluminiumoxid und feinteiliges Polytetrafluorethylen.

Als geeignete Weichmacher, die in Mengen bis zu 20 Gew.% des Polymeren angewandt werden können seien genannt Phthalsäuredioctylester, Phthalsäuredibenzylester, Phthalsäurebutylbenzylester, Kohlenwasserstofföle, N-n-Butylbenzolsulfonamid, o- und p-Toluolethylsulfonamid. Färbemittel wie Farbstoffe oder Pigmente können in Mengen bis zu 5 Gew.% angewandt werden.

Die erfindungsgemäßen vollaromatischen flüssigkristallinen Polyetheresterimide eignen sich zur Herstellung von Fäden, Folien, Schäumen und technischen Formteilen durch Spritzguß, Pressen oder Extrusion. Die aus den erfindungsgemäßen Polyetheresterimiden hergestellten Formteile zeichnen sich durch hervorragende mechanische Eigenschaften wie Steifigkeit, Festigkeit und Zähigkeit aus. Sie sind außerordentlich chemikalienresistent und flammwidrig. Zudem besitzen sie eine hohe Wärmeformbeständigkeit und eine glatte abriebfeste Oberfläche. Die erfindungsgemäßen Polyetheresterimide eignen sich daher hervorragend zur Herstellung von Formteilen für die Elektro- und Datentechnik, im Fahrzeugbau und anderen technischen Bereichen. Sie können aber auch als Überzugs- und Beschichtungsmittel pulverförmig dispergiert oder als Film eingesetzt werden.

Die Erfindung sei an folgenden Beispielen veranschaulicht.

Beispiel 1

0,09 mol Terephthalsäure, 0,09 mol Hydrochinon, 0,09 mol der Verbindung

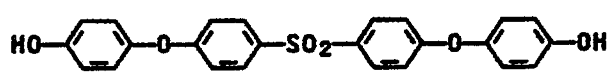

0,09 mol der Verbindung

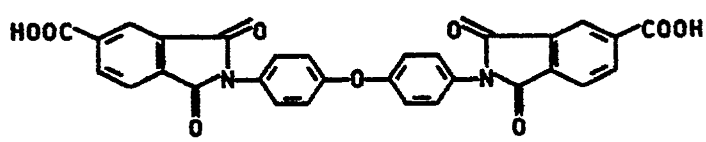

und 100 ml Acetanhydrid werden unter Stickstoffatmosphäre und Rühren innerhalb von 2 h 50 min von 150°C auf 300°C erhitzt. Dabei wird überschüssiges Acetanhydrid und Essigsäure abdestilliert. Anschließend wird innerhalb 15 min der Druck auf 85 mbar reduziert. Man erhält eine viskose fadenbildende Schmelze. Die Polymerschmelze und das erkaltete Polymer zeigen einen perlmuttartigen Glanz. Das Polymer besitzt eine glatte, harte und abriebfeste Oberfläche. Aus DSC-Messungen ergibt sich eine Glastemperatur von 178°C und ein Schmelzpunkt von 290°C. Die inhärente Viskosität beträgt 0,51 dl/g, gemessen in 0,1 %iger (Gew/Vol) Lösung in Pentafluorphenol bei 60°C.

Beispiel 2

0,08 mol Terephthalsäure, 0,08 mol 4-Hydroxybenzoesäure, 0,08 mol Hydrochinon, 0,08 mol der Verbindung

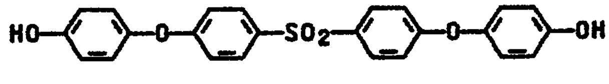

0,08 mol der Verbindung

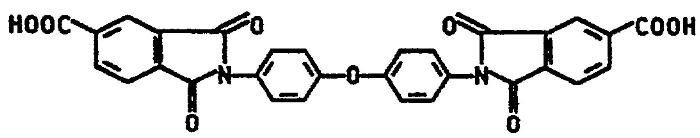

und 96 ml Acetanhydrid werden unter Stickstoffatmosphäre und Rühren innerhalb von 2 h 50 min von 150°C auf 300°C erhitzt. Dabei wird überschüssiges Acetanhydrid und Essigsäure abdestilliert. Anschließend wird innerhalb 20 min der Druck auf 110 mbar reduziert. Man erhält eine viskose fadenbildende Schmelze. Die Polymerschmelze und das erkaltete Polymer zeigen einen perlmuttartigen Glanz. Das Polymer besitzt eine glatte, harte und abriebfeste Oberfläche. Aus DSC-Messungen ergibt sich eine Glastemperatur von 176°C. Die inhärente Viskosität beträgt 0,64 ld/g, gemessen in 0,5 %iger (Gew/Vol) Lösung in 4-Chlorphenol bei 60°C.

**Patentansprüche für die benannten Vertragsstaaten: BE, CH, LI, DE, FR, GB, IT, LU, NL, SE**

1. Vollaromatische mesomorphe Polyetheresterimide die unterhalb 320°C eine flüssigkristalline fadenbildende Schmelze bilden, aufgebaut aus

a) 5 bis 35 Mol.% wiederkehrenden Einheiten der Formel I

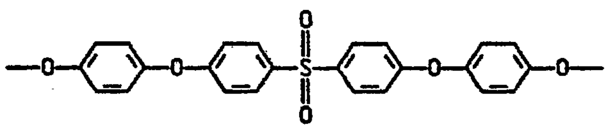

(I)

b) 5 bis 35 Mol.% wiederkehrenden Einheiten der Formel II

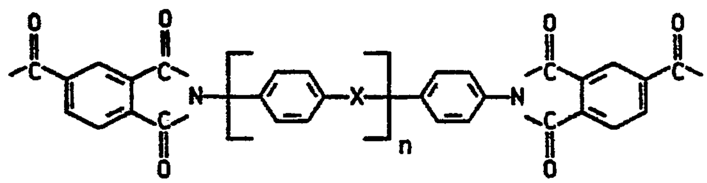

(II)

in der X für eine chemische Bindung -O-, -S-, $-SO_2-$, $-CO-$$-CH_2-$ oder $=C(CH_3)_2$ steht und n 0 oder 1 bedeutet

c) 15 bis 30 Mol.% wiederkehrenden Einheiten der Formel III

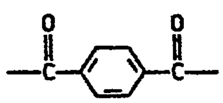

(III)

d) einer Summe aus b) plus c) minus a) entsprechenden molaren Menge an wiederkehrenden Einheiten der Formel IV und/oder V

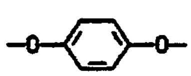

(IV)

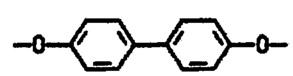

(V)

e) wiederkehrenden Einheiten der Formel VI

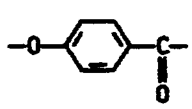

(VI)

wobei sich die Summe der Molprozente der Komponenten a bis e jeweils auf 100 Mol.% ergänzen.

2. Vollaromatische mesomorphe Polyetheresterimide nach Anspruch 1, dadurch gekennzeichnet, daß sie aufgebaut sind aus

a) 10 bis 30 Mol.% wiederkehrenden Einheiten der Formel I,

b) 10 bis 30 Mol.% wiederkehrenden Einheiten der Formel II,

c) 15 bis 30 Mol.% wiederkehrenden Einheiten der Formel III, einer Summe aus b) plus c) minus a) entsprechenden molaren Menge an wiederkehrenden Einheiten der Formeln IV und/oder V,

e) wiederkehrenden Einheiten der Formel VI,

wobei sich die Summe der Molprozente der Komponenten a bis e jeweils auf 100 Mol.% ergänzen.

3. Vollaromatische mesomorphe Polyetheresterimide nach den Ansprüchen 1 und 2, dadurch gekennzeichnet, daß sie aufgebaut sind aus

a) 15 bis 25 Mol.% wiederkehrenden Einheiten der Formel I,

b) 15 bis 25 Mol.% wiederkehrenden Einheiten der Formel II,

c) 20 bis 30 Mol.% wiederkehrenden Einheiten der Formel III,

d) einer Summe aus b) plus c) minus a) entsprechenden molaren Menge an wiederkehrenden Einheiten der Formeln IV und/oder V,

e) wiederkehrenden Einheiten der Formel VI,

wobei sich die Summe der Molprozente der Komponenten a bis e jeweils auf 100 Mol.% ergänzen.

4. Vollaromatische mesomorphe Polyetheresterimide nach den Ansprüchen 1 bis 3, dadurch gekennzeichnet, daß sie eine Glasübergangstemperatur Tg ≥ 150°C haben.

5. Verfahren zur Herstellung von aromatischen mesomorphen Polyetheresterimiden nach den Ansprüchen 1 bis 4, dadurch gekennzeichnet, daß man die Monomeren in einer Stufe in Form der underivatisierten Hydroxy- bzw. Carboxyverbindungen in den beschriebenen molaren Verhältnissen unter Zusatz von überschüssigem Fettsäureanhydrid bei erhöhter Temperatur umsetzt und Fettsäureanhydrid und Fettsäure aus dem Reaktionsgemisch abdestilliert.

6. Verfahren nach Anspruch 5, dadurch gekennzeichnet, daß man die vollaromatischen mesomorphen Polyetheresterimide in fester Phase bei einer Temperatur von 150 bis 250°C nachkondensiert.

7. Verwendung von vollaromatischen Polyetheresterimide nach den Ansprüchen 1 bis 6 zur Herstellung von Fasern, Folien und Formteilen.

**Patentansprüche für den benannten Vertragsstaat: AT**

Verfahren zur herstellung von vollaromatischen mesomorphen Polyetheresterimiden die unterhalb 320°C eine flüssigkristalline fadenbildende Schmelze bilden, aufgebaut aus

a) 5 bis 35 Mol.% wiederkehrenden Einheiten der Formel I

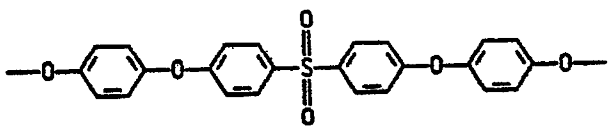

(I)

b) 5 bis 35 Mol.% wiederkehrenden Einheiten der Formel II

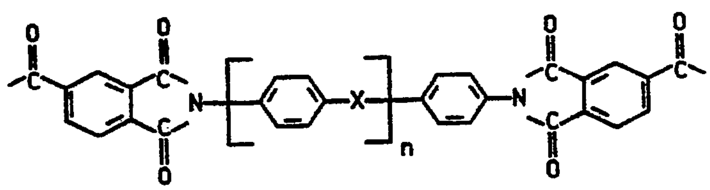

(II)

in der X für -O-, -S-, $-SO_2-$, -CO-, $-CH_2-$ oder $=C(CH_3)_2$ steht und n 0 oder 1 bedeutet

c) 15 bis 30 Mol.% wiederkehrenden Einheiten der Formel III

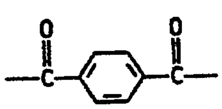

(III)

d) einer Summe aus b) plus c) minus a) entsprechenden molaren Menge an wiederkehrenden Einheiten der Formel IV und/oder V

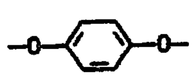

(IV)

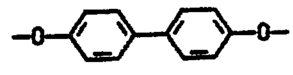

(V)

e) wiederkehrenden Einheiten der Formel VI

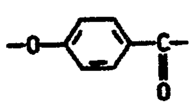

(VI)

wobei sich die Summe der Molprozente der Komponenten a bis e jeweils auf 100 Mol.% ergänzen, durch Umsetzen der den Einheiten I bis VI entsprechenden Hydroxy- und Carboxyverbindungen oder deren Ester bindenden Derivate

2. Verfahren nach Anspruch 1, dadurch gekennzeichnet, daß die vollaromatischen mesomorphen Polyetheresterimide aufgebaut sind aus

a) 10 bis 30 Mol.% wiederkehrenden Einheiten der Formel I,
b) 10 bis 30 Mol.% wiederkehrenden Einheiten der Formel II,
c) 15 abis 30 Mol.% wiederkehrenden Einheiten der Formel III, einer Summe aus b) plus c) minus a) entsprechenden molaren Menge an wiederkehrenden Einheiten der Formeln IV und/oder V,
e) wiederkehrenden Einheiten der Formel VI,
wobei sich die Summe der Molprozente der Komponenten a bis e jeweils auf 100 Mol.% ergänzen.

3. Verfahren hach den Ansprüchen 1 aund 2, dadurch gekennzeichnet, daß die vollaromatischen mesomorphen Polyetheresterimide aufgebaut sind aus

a) 15 bis 25 Mol.% wiederkehrenden Einheiten der Formel I,
b) 15 bis 25 Mol.% wiederkehrenden Einheiten der Formel II,
c) 20 bis 30 Mol.% wiederkehrenden Einheiten der Formel III,
d) einer Summe aus b) plus c) minus a) entsprechenden molaren Menge an wiederkehrenden Einheiten der Formeln IV und/oder V,
e) wiederkehrenden Einheiten der Formel VI,
wobei sich die Summe der Molprozente der Komponten a bis e jeweils auf 100 Mol.% ergänzen.

4. Verfahren nach den Ansprüchen 1 bis 3, dadurch gekennzeichnet, daß die vollaromatischen mesomorphen Polyetheresterimide eine Glasübergangstemperatur Tg≥ 150°C haben.

5. Verfahren nach den Ansprüchen 1 bis 4, dadurch gekennzeichnet, daß man die Monomeren in einer Stufe in Form der underivatisierten Hydroxy- bzw. Carboxyverbindungen in den beschriebenen molaren Verhältnissen unter Zusatz von überschüssigem Fettsäureanhydrid bei erhöhter Temperatur umsetzt und Fettsäureanhydrid und Fettsäure aus dem Reaktionsgemisch abdestilliert.

6. Verfahren nach den Ansprüchen 1 bis 5, dadurch gekennzeichnet, daß man die vollaromatischen mesomorphen Polyetheresterimide in fester Phase bei einer Temperatur von 150 bis 250°C nachkondensiert.

7. Verwendung der nach den Ansprüchen 1 bis 6 hergestellten vollaromatischen Polyetheresterimide zur Herstellung von Fasern, Folien und Formteilen.

**Revendications pour les Etats contractants: BE, CH, DE, FR, GB, IT, LI, LU, NL, SE**

Polyéther-ester-imides mésomorphes, totalement aromatiques, qui, en-dessous de 320°C, forment une masse fondue formatrice de fils, liquide-cristalline, constituée de

a) 5 à 35% molaires d'unités récurrentes de la formule I

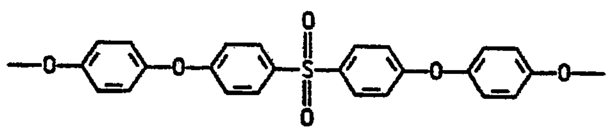

(I)

b) 5 à 35% molaires d'unités récurrentes de la formule II

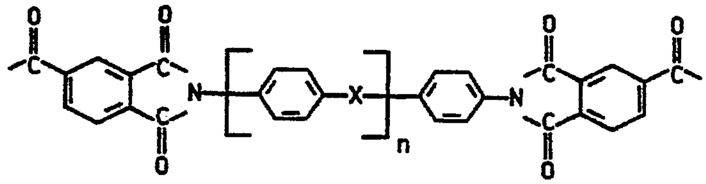

(II)

dans laquelle X représente une liaison chimique –O–, –S–, $-SO_2-$, –CO–, $-CH_2-$, ou $=C(CH_3)_2$ et n est égal à 0 ou à 1,

c) 15 à 30% molaires d'unités récurrentes de la formule III

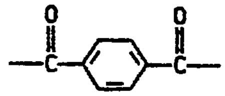

(III)

d) une quantité molaire correspondant à la somme de b) plus c) moins a), d'unités récurrentes de la formule IV et/ou de la formule V

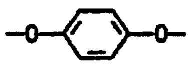 (IV) 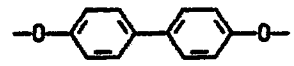 (V)

e) d'unités récurrentes de la formule (VI)

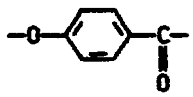 (VI)

où la somme des pourcentages molaires des composants a à e parfait à chaque fois 100% molaires.

2. Polyéther-ester-imides mésomorphes, totalement aromatiques, suivant la revendication 1, caractérisé en ce qu'ils se composent de

a) 10 à 30% molaires d'unités récurrentes de la formule I,
b) 10 à 30% molaires d'unités récurrentes de la formule II,
c) 15 à 30% molaires d'unités récurrentes de la formule III,
d) d'une portion molaire correspondant à la somme de b) plus c) moins a) d'unités récurrentes des formules IV et/ou V,
e) d'unités récurrentes de la formule VI,

où la somme des pourcentages molaires des composants a à e parfait à chaque fois 100% molaires.

3. Polyéther-ester-imides mésomorphes, totalement aromatiques, selon les revendications 1 et 2, caractérisé en ce qu'ils sont constitués de

a) 15 à 25% molaires d'unités récurrentes de la formule I,
b) 15 à 25% molaires d'unités récurrentes de la formule II,
c) 20 à 30% molaires d'unités récurrentes de la formule III,
d) d'une portion molaire correspondant à la somme de b) plus c) moins a) d'unités récurrentes des formules IV et/ou V,
e) d'unités récurrentes de la formule VI,

où la somme des pourcentages molaires des composants a à e parfait à chaque fois 100% molaires.

4. Polyéther-ester-imides mésomorphes, totalement aromatiques, selon les revendications 1 à 3, caractérisés en ce qu'ils possèdent une température de transition vitreuse Tg égale ou supérieure à 150°C.

5. Procédé de préparation de polyéther-ester-imides mésomorphes, totalement aromatiques, suivant les revendications 1 à 4, caractérisé en ce que l'on fait réagir les monomères, en une seule étape, sous forme des composés hydroxylés ou carboxylés non transformés en dérivés, dans les proportions molaires décrites, sous addition d'anhydride d'acide gras excédentaire à température élevée et on chasse par distillation l'acide gras et l'anhydride d'acide gras du mélange réactionnel.

6. Procédé suivant les revendications 5, caractérisé en ce que l'on procède à la post-condensation des polyéther-ester-imides mésomorphes, totalement aromatiques, en phase solide, à une température de 150 à 250°C.

7. Utilisation des polyéther-ester-imides totalement aromatiques, suivant les revendications 1 à 6, en vue de la fabrication de fibres, de feuilles et d'articles moulés.

**Revendications pour l'Etat contractant: AT**

1. Procédé de préparation de polyéther-ester-imides mésomorphes, totalement aromatiques qui, endessou de 320°C, forment une masse fondue formatrice de fils, liquide-cristalline, constitués de

a) 5 à 35% molaires d'unités récurrentes de la formule I

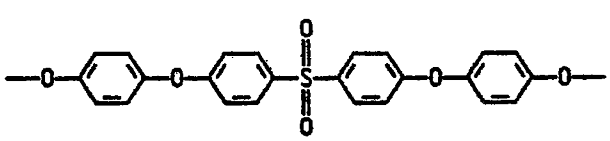 (I)

b) 5 à 35% molaires d'unités récurrentes de la formule II

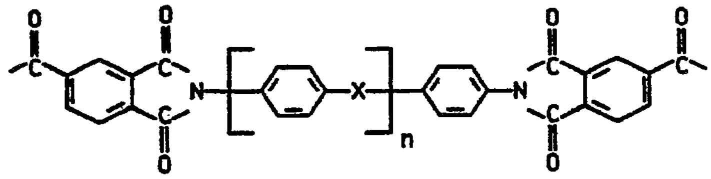 (II)

dans laquelle X représente une liaison chimique –O–, –S–, –SO2–, –CO–, $-CH_2-$, ou $=C(CH_3)_2$ et n

est égal à 0 ou à 1,

c) 15 à 30% molaires d'unités récurrentes de la formule III

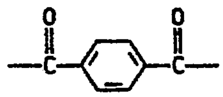

(III)

d) une quantité molaire correspondant à la somme de b) plus c) moins a), d'unités récurrentes de la formule IV et/ou de la formule V

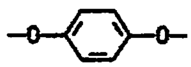

(IV)

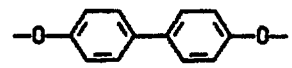

(V)

e) d'unités récurrentes de la formule (VI)

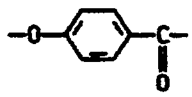

(VI)

où la somme des pourcentages molaires des composants a à e parfait à chaque fois 100% molaires, par réaction des composés hydroxylés et carboxylés correspondant aux unités I à VI, ou de leures dérivés estérogènes.

2. Procédé suivant la revendication 1, caractérisé en ce que les polyéther-ester-imides mésomorphes, totalement aromatiques, sont constitués de

a) 10 à 30% molaires d'unités récurrentes de la formule I,

b) 10 à 30% molaires d'unités récurrentes de la formule II,

c) 15 à 30% molaires d'unités récurrentes de la formule III,

d) d'une proportion molaire correspondant à la somme de b) plus c) moins a) d'unités récurrentes de la formule IV et/ou V,

e) d'unités récurrentes de la formule VI,

où la somme des pourcentages molaires des composants a à e parfait à chaque fois 100% molaires.

3. Procédé suivant les revendications 1 et 2, caractérisé en ce que les polyéther-ester-imides mésomorphes, totalement aromatiques, sont constitués de

a) 15 à 25% molaires d'unités récurrentes de la formule I,

b) 15 à 25% molaires d'unités récurrentes de la formule II

c) 20 à 30% molaires d'unités récurrentes de la formule III,

d) d'une proportion molaire correspondant à la somme de b) plus c) moins a) d'unités récurrentes de la formule IV et/ou V,

e) d'unités récurrentes de la formule VI,

où la somme des pourcentages molaires des composants a à e parfait à chaque fois 100% molaires.

4. Procédé suivant les revendications 1 à 3, caractérisé en ce que les polyéther-ester-imides possèdent une température de transition vitreuse Tg égale ou supérieure à 150°C.

5. Procédé suivant les revendications 1 à 4, caractérisé en ce que'on fait réagir les monomères, en une seule étape, sous forme des composés hydroxylés ou carboxylés non transformés en dérivés, dans les proportions molaires décrites, sous addition d'anhydride d'acide gras excédentaire à température élevée et on chasse par distillation l'acide gras et l'anhydride d'acide gras du mélange réactionnel.

6. Procédé suivant les revendications 1 à 5, caractérisé en ce que l'on procède à la post-condensation des polyéther-ester-imides mésomorphes, totalement aromatiques, en phase solide, à une température de 150 à 250°C.

7. Utilisation des polyéther-ester imides totalement aromatiques, préparés selon les revendications 1 à 6, en vue de la fabrication de fibres, de feuilles et d'articles moulés.

**Claims for the Contracting States: BE, CH, LI, DE, FR, GB, IT, LU, NL and SE**

1. A wholly aromaticmesomorphic polyether ester imide which forms a liquid-crystalline fiber-forming melt below 320°C and is composed of

a) from 5 to 35 mol% of repeat units of the formula I

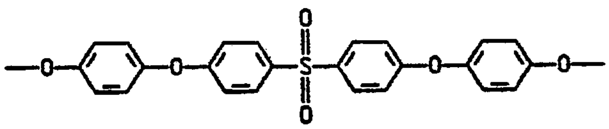

(I)

b) from 5 to 35 mol% of repeat units of the formula II

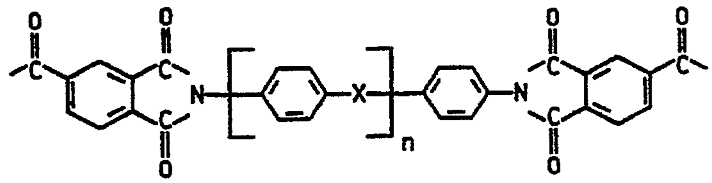

(II)

where X is a chemical bond, –O–, –S–, $-SO_2-$, –CO–, $-CH_2-$ or $=C(CH_3)_2$, and n is 0 or 1,

c) from 15 to 30 mol% of repeat units of the formula III

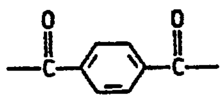

(III)

d) a molar amount corresponding to the total amount of b) plus c) minus a) of repeat units of the formulae IV and/or V

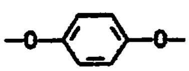

(IV)

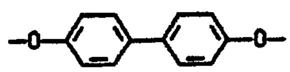

(V)

e) repeat units of the formula VI

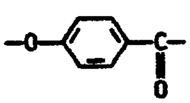

(VI),

the mole percentages of components a, b, c, d and e adding up to 100 mol% in each case.

2. A wholly aromatic mesomorphic polyether ester imide is composed of

a) from 10 to 30 mol% of repeat units of the formula I,

b) from 10 to 30 mol% of repeat units of the formula II,

c) from 15 to 30 mol% of repeat units of the formula III,

d) a molar amount corresponding to the total amount of b) plus c) minus a) of repeat units of the formulae IV and/or V and

e) repeat units of the formula VI,

the mole percentages of components a, b, c, d and e adding up to 100 mol% in each case.

3. A wholly aromatic mesomorphic polyether ester imide as claimed in either of claims 1 and 2, composed of

a) from 15 to 25 mol% of repeat units of the formula I,

b) from 15 to 25 mol% of repeat units of the formula II,

c) from 20 to 30 mol% of repeat units of the formula III,

d) a molar amount corresponding to the total amount of b) plus c) minus a) of repeat units of the formulae IV and/or V and

e) repeat units of the formula VI,

the mole percentages of components a, b, c, d and e adding up to 100 mol% in each case.

4. A wholly aromatic mesomorphic polyether ester imide as claimed in any of claims 1 to 3, which has a glass transition temperature $Tg \geq 150°C$.

5. A process for preparing an aromatic mesomorphic polyether ester imide as claimed in any of claims 1 to 4 by reacting the monomers in a single stage in the form of the underivatized hydroxy and carboxy compounds in the molar ratios described in the presence of excess fatty acid anyhdride at elevated temperatures and in the form of the underivatized hydroxy and carboxy compounds in the molar ratios described in the presence of excess fatty acid anhydride at elevated temperatures and distilling fatty acid anhydride and fatty acid out of the reaction mixture.

6. A process as claimed in any of claims 1 to 5, wherein the wholly aromatic mesomorphic polyether ester imide is postcondensed in the solid phase at 150–250°C.

7. The use of a wholly aromatic polyether ester imide prepared as claimed in any of claims 1 to 6 for preparing fibers, films and moldings.

**Claims for the Contracting States: AT**

1. A process for preparing a wholly aromatic mesomorphic polyether ester imide which forms a liquid-crystalline fiber-forming melt below 320°C and is composed of

a) from 5 to 35 mol% of repeat units of the formula I

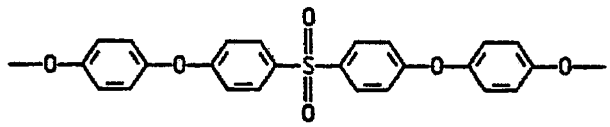

(I)

b) from 5 to 35 mol% of repeat units of the formula II

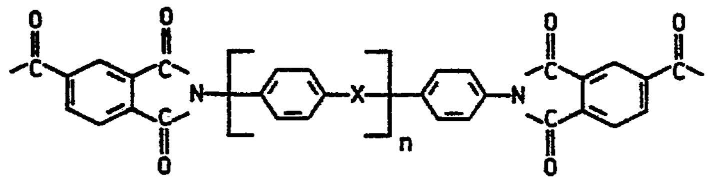

(II)

where X is a chemical bond, $-O-$, $-S-$, $-SO_2-$, $-CO-$, $-CH_2-$ or $=C(CH_3)_2$, and n is 0 or 1,

c) from 15 to 30 mol% of repeat units of the formula III

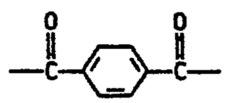

(III)

d) a molar amount corresponding to the total amount of b) plus c) minus a) of repeat units of the formulae IV and/or V

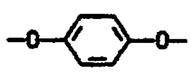

(IV)

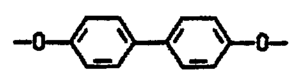

(V)

e) repeat units of the formula VI

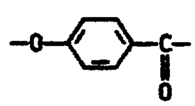

(VI),

the mole percentages of components a, b, c, d and e adding up to 100 mol% in each case, by reacting the hydroxy and carboxy compounds corresponding to units I, II, III, IV, V and VI or the ester-forming derivatives thereof.

2. A process as claimed in claim 1, wherein the wholly aromatic mesomorphic polyether esterimide is composed of

a) from 10 to 30 mol% of repeat units of the formula I,
b) from 10 to 30 mol% of repeat units of the formula II,
c) from 15 to 30 mol% of repeat units of the formula III,
d) a molar amount corresponding to the total amount of b) plus c) minus a) of repeat units of the formulae IV and/or V and
e) repeat units of the formula VI,

the mole percentages of components a, b, c, d and e adding up to 100 mol% in each case.

3. A process as claimed in claim in either of claims 1 and 2, wherein the wholly aromatic mesomorphic polyether ester imide is composed of

a) from 15 to 25 mol% of repeat units of the formula I,
b) from 15 to 25 mol% of repeat units of the formula II,
c) from 20 to 30 mol% of repeat units of the formula III,
d) a molar amount corresponding to the total amount of b) plus c) minus a) of repeat units of the formulae IV and/or V and
e) repeat units of the formula VI,

the mole percentages of components a, b, c, d and e adding up to 100 mol% in each case.

4. A process as claimed in any of claims 1 to 3, wherein the wholly aromatic mesomorphic polyether ester imide has a glass transition temperature Tg ≥ 150°C.

5. A process as claimed in any of claims 1 to 4 which comprises reacting the monomers in a single stage distilling fatty acid anhydride and fatty acid out of the reaction mixture.

6. A process as claimed in claim 5, wherein the wholly aromatic mesomorphic polyether ester imide is postcondensed in the solid phase at 150–250°C.

7. The use of a wholly aromatic polyether ester imide as claimed in any of claims 1 to 6 for preparing fibers, films and moldings.